# EUROPEAN PATENT SPECIFICATION

(11) **EP 2 431 203 B1**
(45) Date of publication and mention of the grant of the patent: **14.02.2018**
(21) Application number: 11178687.7
(22) Date of filing: 24.08.2011
(51) Int. Cl.: B60H 1/32, F25B 13/00, B60H 1/00

(54) **Heat pump system**
Wärmepumpensystem
Système de pompe à chaleur

(30) Priority: 20.09.2010 JP 2010210287
(43) Date of publication of application: 21.03.2012
(73) Proprietor: Valeo Japan Co., Ltd., Saitama 360-0193 (JP)
(72) Inventor: Tsuji, Teruaki, Kumagaya-shi, Saitama 360-0193 (JP)
(74) Representative: Metz, Gaëlle

(56) References cited:
- EP-A1- 2 090 448
- JP-A- 8 238 923
- JP-A- 2002 240 544
- JP-A- 2009 293 905
- JP-A- 2010 132 080
- US-A1- 2006 011 337

## Description

The present invention relates to a heat pump system that includes a heat exchanging medium circulating path through which a heat exchanging medium circulates and a compressor disposed on the heat exchanging medium circulating path, which compresses the heat exchanging medium. The heat pump system according to the present invention will prove particularly effective in vehicular applications.

Air-heating devices used to heat the space inside the cabin of a vehicle in the related art include an air-heating device equipped with a heating heat exchanger disposed in an air passage, which uses as its heat source water having been heated with exhaust heat from the internal combustion engine used to drive the vehicle (see, for instance, Japanese Laid Open Patent Publication No. 2002-240544) and an air-heating device equipped with a heating heat exchanger disposed within an air passage, which heats the air flowing through the air passage by directly utilizing heat generated with electric power (see, for instance, Japanese Laid Open Patent Publication No. 2010-132080). In addition to these air-heating devices, air-heating devices equipped with a heat pump system, such as that disclosed in Japanese Laid Open Patent Publication No. H8-238923, have become common in recent years.

In the heat pump system disclosed in Japanese Laid Open Patent Publication No. H8-238923, a compressor, a main condenser disposed in an area outside the cabin, a sub-condenser disposed within an air passage of an air-conditioning unit (HVAC unit) and engaged in operation for air-heating purposes, an expansion valve, and an evaporator disposed within the air passage of the HVAC unit are connected together via a set of pipings. The heat pump system includes a three-way valve via which a heat exchanging medium, discharged from the compressor, is provided to the main condenser during an air-cooling operation and is provided to the sub-condenser during an air-heating operation.

The heat pump system disclosed in patent literature 3 achieves advantages in that it can be utilized in an electric vehicle without an internal combustion engine, a hybrid vehicle in which the exhaust heat from the internal combustion engine is relatively small in quantity, or an automobile driven by a diesel engine, and in that the load on the environment can be reduced, since consumption of fossil fuels, such as gasoline, is reduced.

The heat pump system disclosed in patent literature 3 is used to heat the air flowing through the air passage by releasing the heat of the heat exchanging medium, the temperature and the pressure of which have been raised by the compressor, into the air flowing through the air passage as the high-temperature/high-pressure heat exchanging medium passes through an inside heat exchanger such as the sub-condenser used for purposes of air-heating.

Document US A 2006 0011337 discloses a heat pump system according to the preamble of claim 1. The heating performance of the heat pump system, with which it heats the air passing through the inside heat exchanger, may be improved with more energy applied to the heat exchanging medium passing through the inside heat exchanger by, for instance, raising the temperature of the heat exchanging medium before it passes through the inside heat exchanger. However, this method requires new energy specifically to raise the temperature of the heat exchanging medium, which is bound to conflict with the need for energy saving that has become a critical goal in automotive applications in recent years.

Accordingly, an object of the present invention is to provide a heat pump system capable of applying more energy to the heat exchanging medium without allowing heat generated at the compressor during an air-heating operation to be wasted, thereby assuring improved air-heating performance through targeted and full use of existing energy in the heat pump system available in the form of the heat generated at the compressor.

The heat pump system according to the present invention comprises, at least, a compressor that suctions a heat exchanging medium, compresses the heat exchanging medium and discharges the compressed heat exchanging medium, an inside heat exchanger housed within an air passage located in a cabin side, an outside heat exchanger disposed in an area outside the cabin side and an expansion device connected together via a set of pipings. The heat pump system further includes a switching means capable of switching heat exchanging medium flow directions so as to provide the heat exchanging medium at a relatively high-temperature, discharged from the compressor, to the inside heat exchanger during an air-heating operation and to the outside heat exchanger during an air-cooling operation. The heat pump system is characterized in that the compressor is housed inside an adiabatic compressor housing, the compressor housing is set in a sealed state so as to keep the air around the compressor trapped within said housing, so that heat generated at the compressor is stored in air around the compressor. The heat pump system according to the present invention may be adopted in automotive applications, and, in such a case, the cabin side may be a cabin inside space. In addition, provided that the heat pump system according to the present invention is adopted in an automotive application, the area outside the cabin side will be a cabin outside area located outside the cabin. The cabin outside area may be an engine compartment area of a vehicle equipped with an internal combustion engine or it may be an area outside the vehicle. The heat exchanging medium is a coolant such as Freon or CO2. The switching means may be, for instance, a direction switching valve.

Note that the cabin side means not the side that mounted engine but the side that can be occupied by people in view of the fire board.

The compressor in the heat pump system structured as described above is sealed within the adiabatic compressor housing during the air-heating operation, so as to trap the air around the compressor within the compressor housing. More specifically, the air around the compressor remains in the space between the compressor and the compressor housing. As a result, the heat radiating from the surface of the compressor is stored in the air present around the compressor instead of becoming released away from the compressor, thereby raising the temperature of the air around the compressor to a relatively high level, which, in turn, sustains the temperature at the surface of the compressor, causing an increase in the temperature of the heat exchanging medium discharged from the compressor to a relatively high level.

The compressor housing in the heat pump system according to the present invention includes an air intake opening through which airflows into the compressor housing and an air outlet opening through which the air inside the compressor housing flows out. The compressor housing further includes opening/closing means for opening/closing the air intake opening and the air outlet opening. As both the air intake opening and the air outlet opening are closed via the opening/closing means, the compressor housing is set in a sealed state. The opening/closing means may each be constituted with, for instance, a butterfly-type door or a shutter made up with a plurality of rotatable blades set adjacent to one another in a row.

While the opening/closing means is used to close off the openings at the compressor housing during the air-heating operation, as described above, the openings at the compressor housing are opened during an operation other than the air-heating operation (e.g., during the air-cooling operation) via the opening/closing means so as to cool the compressor housed in the compressor housing with the air traveling through the compressor housing.

The heat pump system according to the present invention may further comprise an inside air-cooling heat exchanger which is housed, together with an impeller, in the air passage further leeward along the air passage relative to the impeller. The air outlet opening at the compressor housing may be made up with a first opening connected with the air passage further on a windward side relative to the impeller and a second opening that opens at an area other than the cabin side. An opening/closing means for opening/closing the first opening and an opening/closing means for opening/closing the second opening are able to open/close the openings independently of each other. During an initial phase of the air-heating operation, the structure described above allows the air having been heated by the compressor inside the compressor housing to flow into an air passage of an HVAC unit through the first air outlet opening so as to improve the air-heating performance of the HVAC unit. At the same time, the warm air supplied to the cooling heat exchanger prevents the inside air-cooling heat exchanger from becoming frozen, which ultimately prevents the heat pump system itself from failing. Furthermore, the air having been heated by the compressor inside the compressor housing is released through the second air outlet opening into the area outside the cabin side during the air-cooling operation so as to prevent any heat from flowing into the HVAC unit and ultimately sustain the maximum air-cooling performance.

According to the present invention described above, the compressor is sustained in a sealed state within the adiabatic compressor housing during the air-heating operation so as to trap the air around the compressor in the space between the compressor and the compressor housing. As a result, the heat emanating through the surface of the compressor is stored in the air around the compressor instead of being released to the outside and the temperature of the air around the compressor rises to a relatively high level, which, in turn, keeps warmth at the surface of the compressor, making it possible to increase the temperature of the heat exchanging medium discharged from the compressor to a relatively high level.

Through these measures, better heating performance is assured without having to apply any new energy specifically to heat the heat exchanging medium during the air-heating operation.

According to the present invention, in particular, the air intake opening and the air outlet opening are both closed with a high level of reliability via the opening/closing means so as to seal off the compressor housing during the air-heating operation, whereas the air intake opening and the air outlet opening at the compressor housing are both opened during an operation other than the air-heating operation (e.g., the air-cooling operation) so as to cool the compressor housed in the compressor housing with air passing through the compressor housing and thus assure a satisfactory level of air-cooling performance uncompromised by the presence of the compressor housing.

According to the present invention, in particular, during the initial phase of the air-heating operation, the air having been heated by the compressor inside the compressor housing is supplied to the HVAC unit so as to improve the air-heating performance of the HVAC unit in the initial phase of the heating operation and, at the same time, the warm air originating from the compressor prevents the inside air-cooling heat exchanger from becoming frozen. During the air-cooling operation, the air having been heated by the compressor inside the compressor housing is released through the air outlet opening into an area outside the cabin side so as to ensure that the air-cooling performance of the HVAC unit is not compromised by any warm air entering the air passage. Ultimately, the air-conditioning performance of the HVAC unit and the operational stability of the heat pump cycle can both be improved.

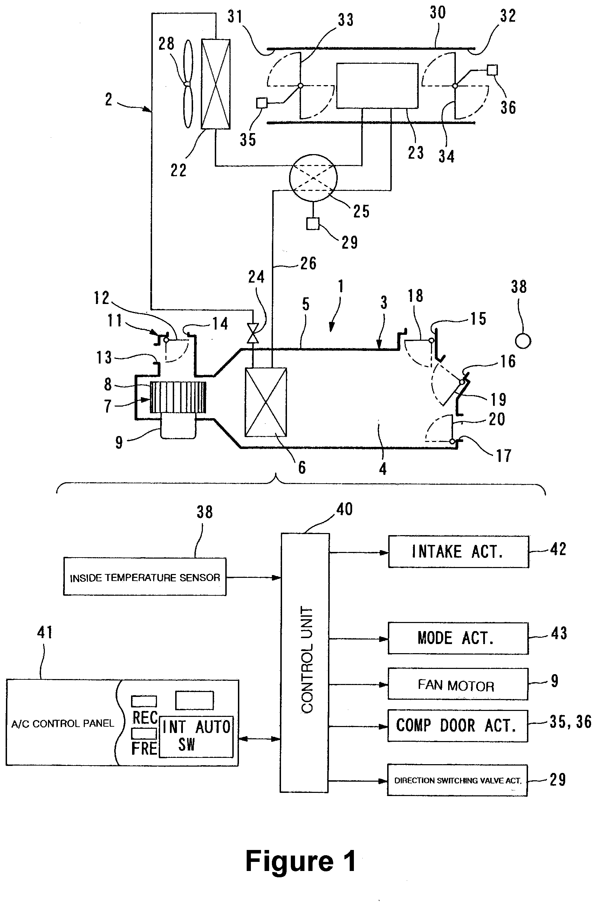

- FIG. 1 illustrates an example of a structure that may be adopted in the heat pump system according to the present invention, a structure that may be adopted in the compressor housing that houses the compressor constituting part of the heat pump system, and a control unit that controls a switching valve and opening/closing means constituting the heat pump system as achieved in an embodiment.

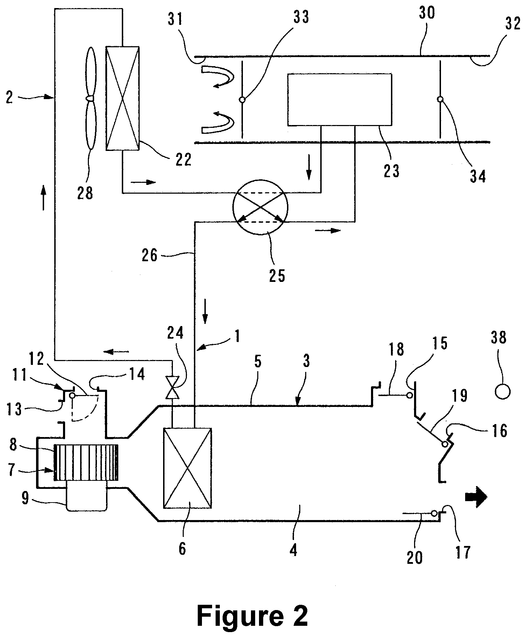

- FIG. 2 illustrates the flow of the heat exchanging medium through a first heat exchanging medium circulation path and the compressor housing in a sealed state in the heat pump system in FIG. 1 engaged in an air-heating operation.

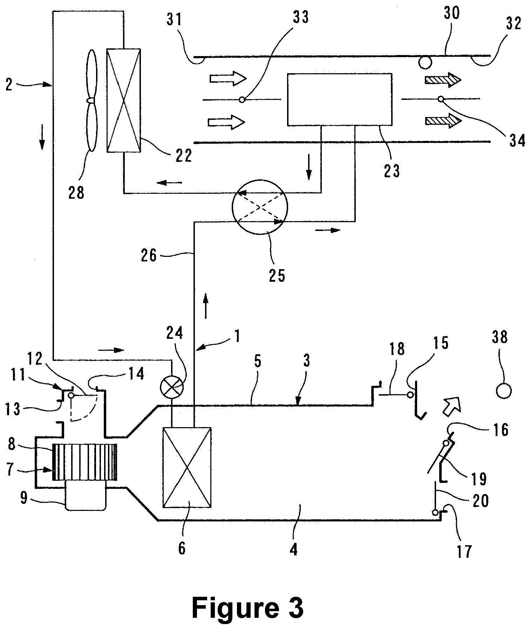

- FIG. 3 illustrates the flow of the heat exchanging medium through a second heat exchanging medium circulation path and the compressor housing in an open state in the heat pump system in FIG. 1 engaged in an air-cooling operation.

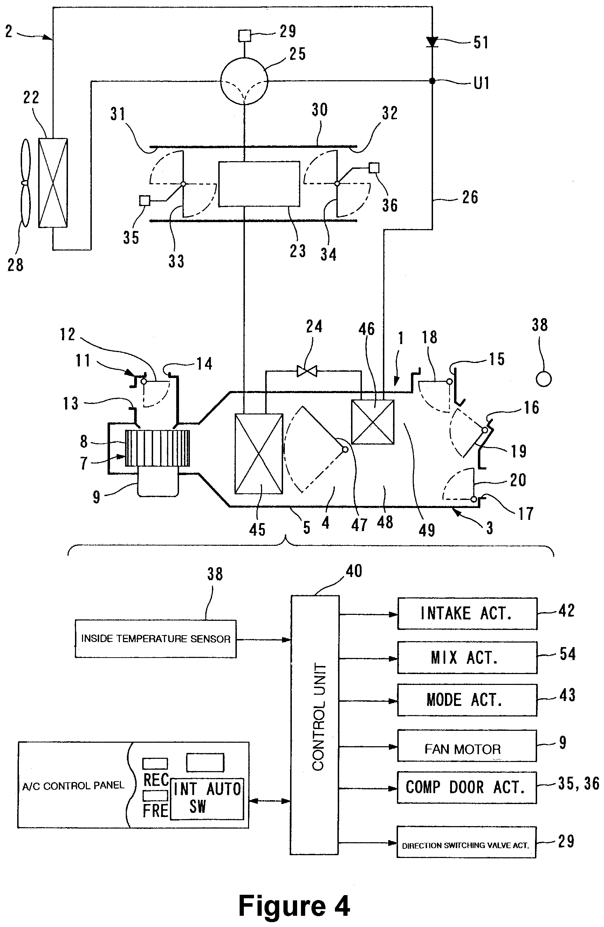

- FIG. 4 illustrates an example of a structure that may be adopted in a heat pump system equipped with two inside heat exchangers distinguishing it from the heat pump system in FIG. 1, a structure that may be adopted the compressor housing that houses the compressor constituting part of the heat pump system, and a control unit that controls a switching valve and opening/closing means constituting the heat pump system, as achieved in an embodiment.

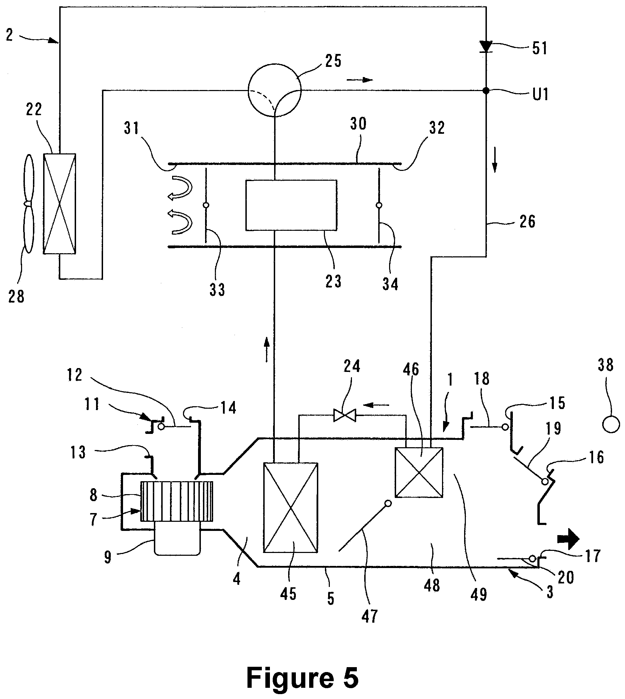

- FIG. 5 illustrates the flow of the heat exchanging medium through a first heat exchanging medium circulation path and the compressor housing in a sealed state in the heat pump system in FIG. 4 engaged in an air-heating operation.

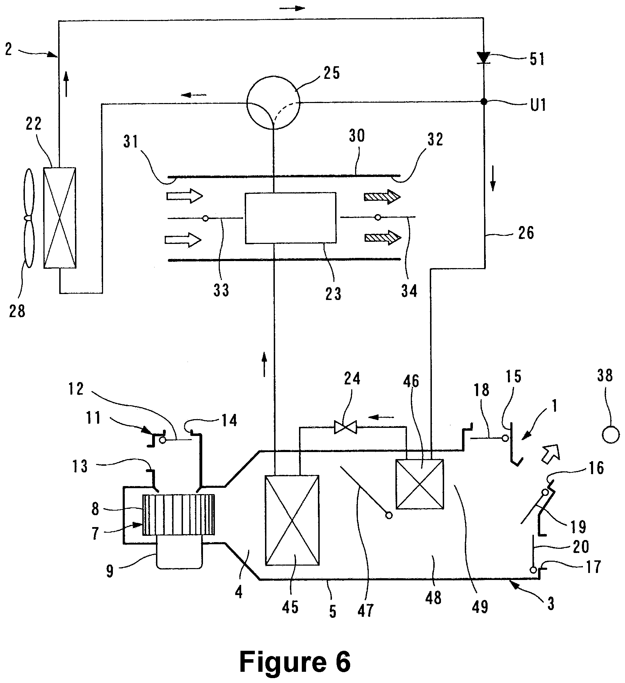

- FIG. 6 illustrates the flow of the heat exchanging medium through a second heat exchanging medium circulation path and the compressor housing in an open state in the heat pump system in FIG. 4 engaged in an air-cooling operation.

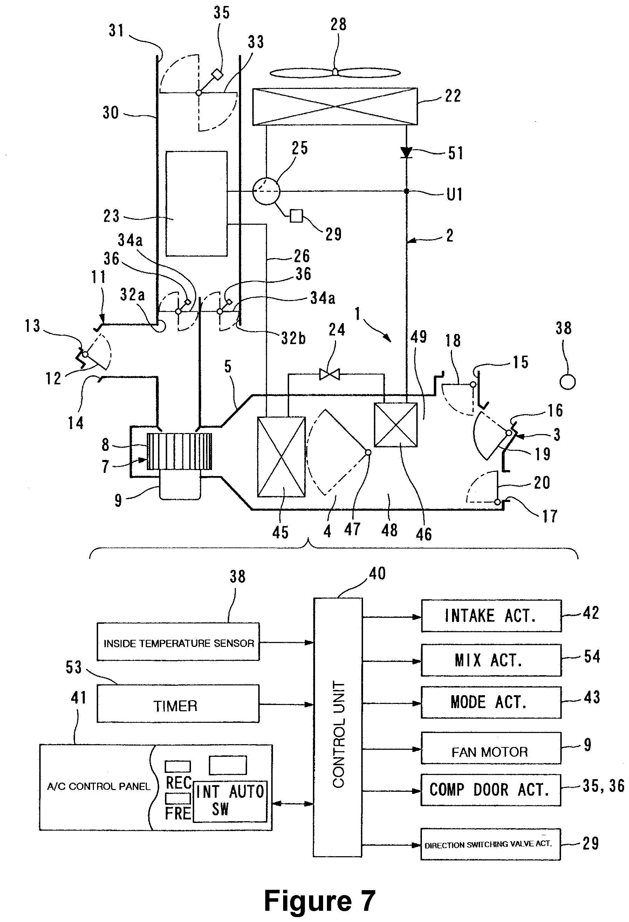

- FIG. 7 illustrates an example of a structure that may be adopted in a heat pump system distinguishable from the heat pump systems shown in FIGS. 1 and 4 in that warm air provided from the compressor is supplied to the HVAC unit, a structure that may be adopted in the compressor housing that houses the compressor constituting part of the heat pump system, and a control unit that controls a switching valve and opening/closing means constituting the heat pump system, as achieved in an embodiment.

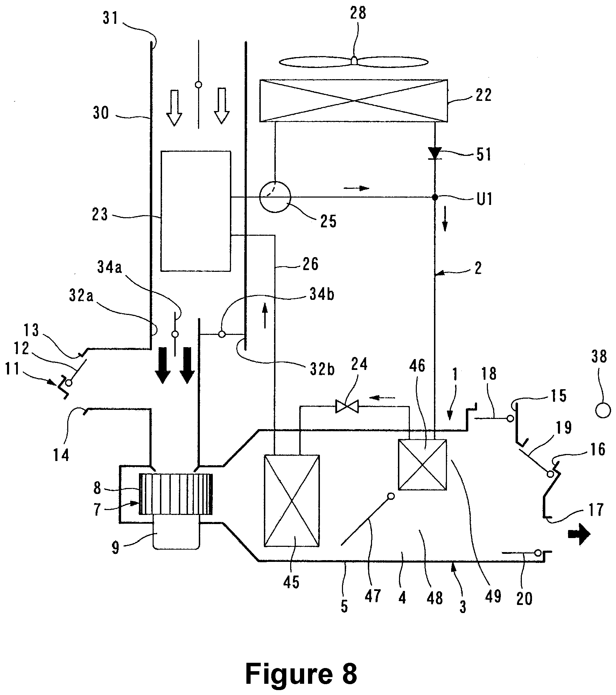

- FIG. 8 illustrates the flow of the heat exchanging medium through a first heat exchanging medium circulation path, the air intake opening at the compressor housing in an open state and the state of communication between the HVAC unit-side air outlet opening and the air passage at the HVAC unit in the heat pump system shown in FIG. 7 during the initial phase of an air-heating operation.

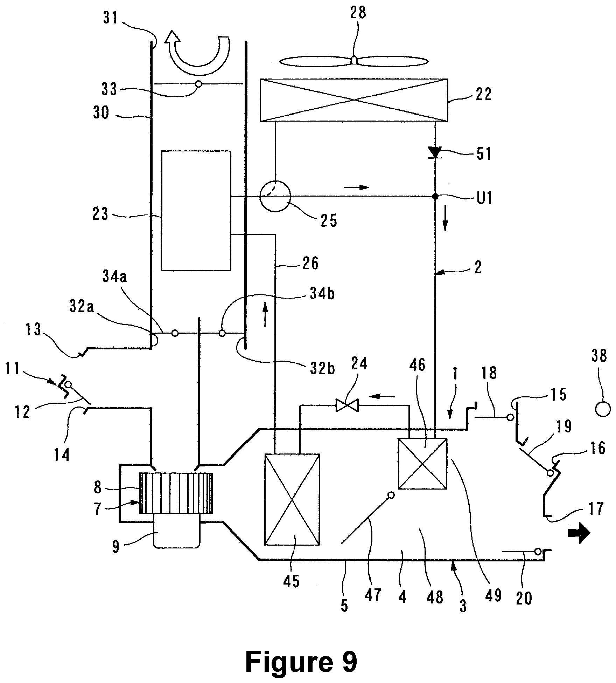

- FIG. 9 illustrates the flow of the heat exchanging medium through the first heat exchanging medium circulation path, and the air intake opening and the two air outlet openings at the compressor housing all in a closed state in the heat pump system shown in FIG. 7 during a stable phase of the air-heating operation.

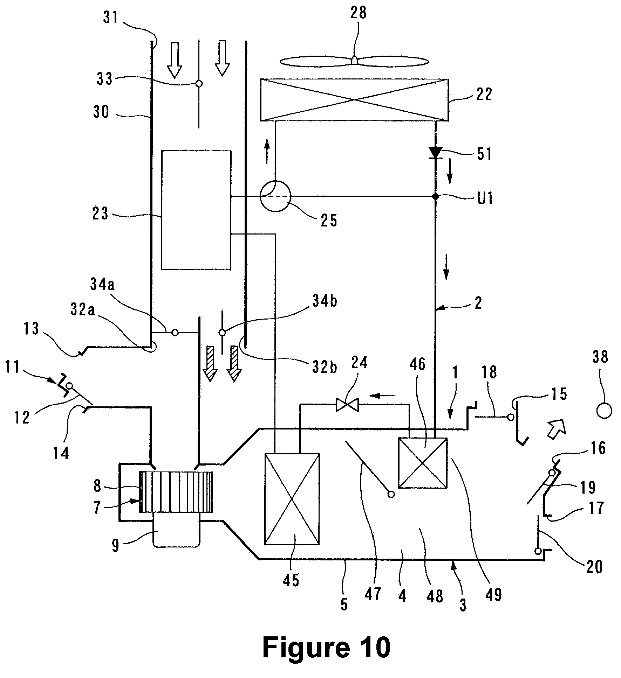

- FIG. 10 illustrates the flow of the heat exchanging medium through a second heat exchanging medium circulation path, the air intake opening at the compressor housing in an open state and the air release outlet opening in open state in the heat pump system shown in FIG. 7 engaged in an air-cooling operation.

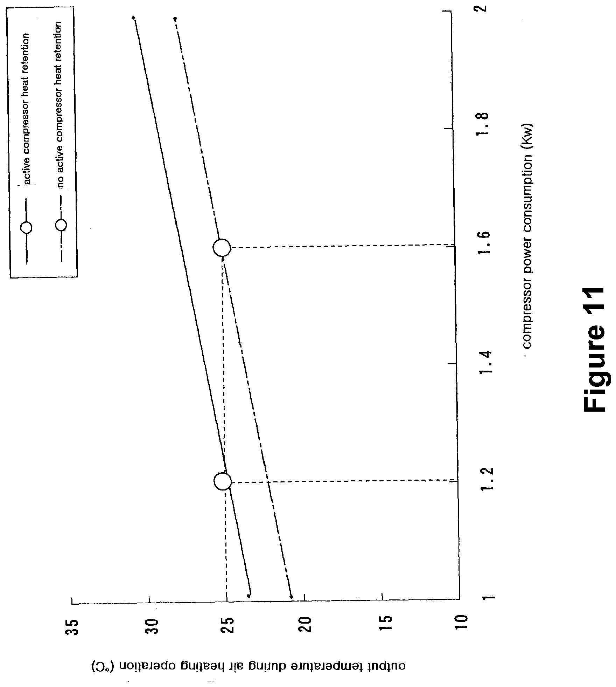

- FIG. 11 is a characteristics diagram of characteristics values measured in an inside air circulation mode for a heat pump system equipped with a compressor sealed with an adiabatic member so as to achieve compressor heat retention and for a heat pump system adopting no special compressor heat retaining measures at an outside air temperature of 0° C, with the temperature of the air output through a foot opening indicated along the vertical axis and the compressor power consumption indicated along the horizontal axis.

The following is a description of embodiments of the present invention, given in reference to the attached drawings.

FIGS. 1 through 3 present an embodiment (embodiment 1) of an air-conditioning apparatus 1 equipped with an HVAC unit 3 and a heat pump system 2.

In this air-conditioning apparatus 1, which may be used in, for instance, an electric vehicle, a hybrid vehicle or the like, the HVAC unit 3 is disposed further into a cabin inside space relative to a firewall (not shown) partitioning a cabin outside area, i.e., an area outside the cabin, from the cabin inside space. An inside heat exchanger 6 constituting part of the heat pump system 2 to be described in detail later, is housed in an upright orientation within a case 5 within which an inside air passage 4 is formed, and a fan 7 is disposed further on an air upstream side relative to the inside heat exchanger 6 within the air passage 4. The fan 7 is constituted with an impeller 8 and a fan motor 9 that drives the impeller 8.

An intake device 11 is disposed further on the air upstream side of the air passage 4 relative to the fan 7, and as the fan 7 rotates, inside air or outside air is drawn into the intake device 11 through an outside air delivery port 13 or an inside air delivery port 14 in correspondence to the position (the degree of openness) of an intake door 12 at the intake device 11.

At the downstream end of the air passage 4, a defrost opening 15 through which air is output toward a windshield (not shown), a ventilation opening 16 through which air is output along an upward direction into the cabin inside space and a foot opening 17 through which air is output along a downward direction into the cabin inside space are formed, and the degrees of openness of the individual openings 15, 16 and 17 are respectively adjusted via mode doors 18, 19 and 20 disposed further to the front of the corresponding openings 15, 16 and 17. In other words, the air-conditioning apparatus is engaged in operation in a defrost mode in which the defrost opening 15 alone is open, a vent mode in which the ventilation opening 16 alone is open, a foot mode in which the foot opening 17 alone is open, a defrost/foot mode in which the defrost opening 15 and the foot opening 17 are open or a bi-level mode in which the ventilation opening 16 and the foot opening 17 are open.

The heat pump system 2 achieved in embodiment 1, which engages the inside heat exchanger 6 to both cool and heat the air in the cabin inside space, includes an outside heat exchanger 22, a compressor 23, an expansion device 24 and a direction switching valve 25 that switches directions along which the heat exchanging medium flows, in addition to the inside heat exchanger 6 disposed within the air passage 4 at the HVAC unit 3. The inside heat exchanger 6, the outside heat exchanger 22, the compressor 23, the expansion device 24 and the direction switching valve 25 are connected with one another via a piping 26, so as to allow the heat exchanging medium such as Freon or CO2 to circulate through a first heat exchanging medium circulation path during an air-heating operation or through a second heat exchanging medium circulation path during an air-cooling operation, as will be described later.

The outside heat exchanger 22, disposed outside the cabin, achieves heat exchange between the air (outside air) and the heat exchanging medium. The outside heat exchanger 22 includes an outside fan 28 constituted with a motor and an impeller rotatably linked with the motor via a rotating shaft, and is installed at a position where it is impacted by wind traveling from the front side of the vehicle while the vehicle travels.

In addition, the compressor 23, also disposed outside the cabin, draws in the heat exchanging medium as it is driven by an electric motor (not shown), compresses the heat exchanging medium and then discharges the compressed heat exchanging medium. However, the compressor 23 may operate on motive power provided by an internal combustion engine such as the vehicle engine in a hybrid vehicle.

The expansion device 24 disposed between the inside heat exchanger 6 and the outside heat exchanger 22, via which the heat exchanging medium transferred from one heat exchanger to the other heat exchanger is depressurized and is thus caused to expand, may be constituted with a block-type expansion valve connected as an integrated part of the inside heat exchanger 6, a capillary tube or the like.

Via the direction switching valve 25 in embodiment 1, a first heat exchanging medium circulation path, through which the heat exchanging medium flows directly from the outside heat exchanger 22 to the compressor 23 and the heat exchanging medium then directly flows from the compressor 23 to the inside heat exchanger 6, as shown in FIG. 2, or a second heat exchanging medium circulation path, through which the heat exchanging medium flows directly from the inside heat exchanger 6 to the compressor 23 and the heat exchanging medium then directly flows from the compressor 23 to the outside heat exchanger 22 as shown in FIG. 3, can be selected. A switchover at the direction switching valve 25 is achieved via an actuator 29 shown in FIG. 1.

The direction switching valve 25 in the heat pump system 2 structured as described above is set to switch to the first heat exchanging medium circulation path shown in FIG. 2 during the air-heating operation, so that the high-temperature/high-pressure heat exchanging medium discharged from the compressor 23 first flows through the inside heat exchanger 6, thereby enabling the inside heat exchanger 6 to function as a heater, and thus heats the air flowing through the air passage 4 by exchanging heat with the air. The heat exchanging medium then sequentially flows through the expansion device 24, the outside heat exchanger 22, the direction switching valve 25 and the compressor 23 in this order. During the air-cooling operation, on the other hand, the direction switching valve 25 is set to switch to the second heat exchanging medium circulation path shown in FIG. 3, and thus, the heat exchanging medium discharged from the compressor 23 first flows to the outside heat exchanger 22 where it becomes cooled. The cooled heat exchanging medium then travels through the expansion device 24 to the inside heat exchanger 6, thereby enabling the inside heat exchanger 6 to function as a cooler and cooling the air flowing through the air passage 4 by exchanging heat with the air. Subsequently, the heat exchanging medium sequentially flows through the direction switching valve 25 and the compressor 23 in this order.

In the heat pump system 2 achieved in embodiment 1, the compressor 23 is housed inside a compressor housing 30, which includes an air intake opening 31 through which air from the cabin outside area is drawn in and an air outlet opening 32 through which air is output to the cabin outside area. The air intake opening 31 opens on the air flow downstream side of the outside heat exchanger 22 so that air can be taken into the compressor housing 30 through the air intake opening 31 as the outside fan 28, disposed by the outside heat exchanger 22, is driven even when the vehicle is not in a traveling state. It is to be noted that no particular restrictions are imposed with regard to the internal structure and the volumetric capacity of the compressor housing 30, as long as a relatively small clearance is formed between the compressor 23 and the inner wall of the compressor housing 30. In addition, while it is desirable to constitute the compressor housing 30 with a highly adiabatic material (a material with low thermal conductivity), a non-regulating material satisfying the various requirements imposed on a vehicle component, such as heat resistance, vibration resistance and strength, and the required level of cost effectiveness, may be selected as the optimal material. Such a material used to constitute the compressor housing 30 may be, for instance, polypropylene, an ABS resin or an acrylic resin. The compressor housing 13 constituted of such a material may be rendered adiabatic through design by, for instance, selecting the optimal thickness or the optimal shape or by combining the material with an adiabatic material (e.g., foam urethane). Similar approaches may be taken with regard to the material to constitute the compressor housing 30 and with respect to assurance of the adiabatic performance of the compressor housing 30 in embodiments 2 and 3 to be described later.

The air intake opening 31 is opened/closed with a compressor opening/closing door 33, whereas the air outlet opening 32 is opened/closed with a compressor opening/closing door 34. Open/close control for the compressor opening/closing doors 33 and 34, each shown as a butterfly-type door in the illustrations of embodiment 1, is achieved via actuators 35 and 36 respectively. However, the compressor opening/closing doors 33 and 34 do not need to be butterfly-type doors, and they may instead be shutter-type doors, which open/close the openings 31 and 32 as a plurality of blades, disposed side-by-side along the radii of the openings 31 and 32 rotate. As a further alternative, cantilevered doors or sliding doors may be used as the compressor opening/closing doors.

Once the openings 31 and 32 at the compressor housing 30 are closed with the compressor opening/closing doors 33 and 34, the compressor housing 30 is set in a sealed state, in which the air present around the compressor 23 inside the compressor housing 30 is trapped in the compressor housing 30 instead of being released to the outside of the compressor housing 30.

In addition, the structure achieved in embodiment 1 further includes an inside temperature sensor 38, which detects the inside temperature such as the cabin internal temperature, disposed outside the case 5, e.g., at an instrument panel or on the dashboard within the cabin.

Furthermore, the air-conditioning apparatus 1 achieved in embodiment 1 includes a control unit 40, as shown in FIG. 1. In response to various input signals provided thereto, the control unit 40 controls the individual structural elements. The following is a brief summary of the control unit 40. The input signals provided to the control unit 40 include an input signal indicating the inside temperature provided by the inside temperature sensor 38, an input signal indicating a temperature setting, which is provided from a control panel 41, an input signal indicating the outside air temperature (not shown) and an input signal indicating whether or not an occupant is seated, provided from a seat sensor, among various signals.

Based upon the input signals, the control unit 40 outputs control signals for the fan motor 9, the actuators 35 and 36 that drive the compressor opening/closing doors 33 and 34 respectively and the actuator 29 that drives the direction switching valve 25, so as to control the rotation rate of the fan motor 9, execute open/close control for the compressor opening/closing doors 33 and 34 and switch the direction switching valve 25. The control unit 40 also uses the input signals to generate control signals for an intake actuator 42 for the intake device 11 and a mode actuator 43 for the mode doors 18, 19 and 20 so as to switch to the inside air delivery port 13 or the outside air delivery port 14 and select a specific output mode.

During the air-heating operation, the control signal provided from the control unit 40 to the direction switching valve 25 sets the direction switching valve 25 to select the first heat exchanging medium circulation path shown in FIG. 2 at the heat pump system 2. During the air-heating operation, the foot mode is selected in response to the control signal provided from the control unit 40 to the mode actuator 43 and also, the two openings 31 and 32 at the compressor housing 30 are closed with the compressor opening/closing doors 33 and 34 in response to the control signals provided from the control unit 40 to the actuators 35 and 36 that drive the compressor opening/closing doors 33 and 34 respectively, as shown in FIG. 2 at the HVAC unit 3.

As a result, the air present around the compressor 23, trapped inside the compressor housing 30 becomes heated by the compressor 23 and heat is stored in the air surrounding the compressor 23. Since the air inside the compressor housing 30, with its temperature thus risen, keeps the warmth of the compressor 23, the temperature of the heat exchanging medium delivered from the compressor 23 to the inside heat exchanger 6, too, rises to a relatively high level. Consequently, the performance of the inside heat exchanger 6 functioning as a heater that heats the air passing through the air passage 4 improves and air-heated to a sufficiently high-temperature can be output into the cabin inside space through the foot opening 17.

During the air-cooling operation, the control signal provided from the control unit 40 to the direction switching valve 25 in the heat pump system 2 sets the direction switching valve 25 to select the second heat exchanging medium circulation path shown in FIG. 3. During the cooling operation, the vent mode is selected in response to the control signal provided from the control unit 40 to the mode actuator 43 and the two openings 31 and 32 at the compressor housing 30 are both opened with the compressor opening/closing doors 33 and 34 in response to the control signal provided from the control unit 40 to the actuators 35 and 36 that drive the compressor opening/closing doors 33 and 34, as shown in FIG. 3 at the HVAC unit 3.

Thus, the compressor 23 is cooled with the air that, having been taken into the compressor housing 30 through the air intake opening 31, is eventually output to the cabin outside area through the air outlet opening 32, so as to minimize circulation of unnecessarily hot heat exchanging medium through the heat pump system 2.

It is to be noted that during the air-heating operation, too, finer open/close control for the compressor opening/posing doors 33 and 34 may be executed by providing from the control unit 40 control signals for the actuators 35 and 36, which drive the compressor opening/closing doors 33 and 34, generated based upon the detected value of the temperature provided from the inside temperature sensor 38.

FIGS. 4 through 6 provide illustrations of another embodiment (embodiment 2) of the air-conditioning apparatus 1 equipped with an HVAC unit 3 and a heat pump system 2.

In this air-conditioning apparatus 1, which may be used in, for instance, an electric vehicle, a hybrid vehicle or the like, as is the air-conditioning apparatus in embodiment 1, the HVAC unit 3 is disposed further into a cabin inside space relative to a firewall (not shown) partitioning a cabin outside area from the cabin inside space. An inside air-cooling heat exchanger 45, such as an evaporator, constituting part of the heat pump system 2 and an inside air-heating heat exchanger 46 also constituting part of the heat pump system 2, each assuming an upright orientation, are housed side-by-side along the length (front to rear) of the vehicle within a case 5 in which an inside air passage 4 is formed. A fan 7 is disposed further on an air upstream side relative to the inside air-cooling heat exchanger 45 within the air passage 4.

An intake device 11 is disposed further on the air upstream side relative to the fan 7, and as the fan 7 rotates, inside air or outside air is drawn into the intake device 11 through an outside air delivery port 13 or an inside air delivery port 14 in correspondence to the position (the degree of openness) of an intake door 12 at the intake device 11.

Inside the case 5, a cool air passage 48, through which air, having become cooled and dehumidified while passing through the inside air-cooling heat exchanger 45, is guided to the airflow downstream side of the air passage 4 by bypassing the inside air-heating heat exchanger 46 and a hot air passage 49, through which the air having passed through the inside air-heating heat exchanger 46 is guided toward the air flow downstream side of the air passage 4, are formed both as part of the air passage 4. The ratio of the air to pass through the cool air passage 48 and the air to pass through the hot air passage 49 is adjusted at an air mix door 47 disposed between the inside air-cooling heat exchanger 45 and the inside air-heating heat exchanger 46, and then the air, having flowed through the cooling air passage 48 and the air having flowed through the hot air passage 49 mix as intended at a position further downstream relative to the air mix door 47 in the air passage 4, so as to achieve a desired temperature.

At the downstream end of the air passage 4, a defrost opening 15 through which air is output toward a windshield (not shown), a ventilation opening 16 through which air is output along an upward direction into the cabin inside space and a foot opening 17 through which air is output along a downward direction into the cabin inside space are formed, and the degrees of openness of the individual openings 15, 16 and 17 are respectively adjusted via mode doors 18, 19 and 20 disposed further to the front of the corresponding openings 15, 16 and 17. In other words, the air-conditioning apparatus is engaged in operation in a defrost mode in which the defrost opening 15 alone is open, a vent mode in which the ventilation opening 16 alone is open, a foot mode in which the foot opening 17 alone is open, a defrost/foot mode in which the defrost opening 15 and the foot opening 17 are open or a bi-level mode in which the ventilation opening 16 and the foot opening 17 are open.

The heat pump system 2, which cools and heats the air inside the cabin inside space with the inside cooling heat exchanger 45 and the inside air-heating heat exchanger 46 mentioned earlier, includes an outside heat exchanger 22, a compressor 23, an expansion device 24, a direction switching valve 25 via which the direction along which the heat exchanging medium flows is switched and a check valve 51 that prevents a reverse flow of the heat exchanging medium, in addition to the heat exchangers 45 and 46 disposed within the air passage 4 of the HVAC unit 3.

The inside air-cooling heat exchanger 45, the inside air-heating heat exchanger 46, the outside heat exchanger 22, the compressor 23, the expansion device 24, the direction switching valve 25 and the check valve 51 are connected with one another via a piping 26, so as to allow the heat exchanging medium such as Freon or CO2 to circulate through a first heat exchanging medium circulation path during the air-heating operation or through a second heat exchanging medium circulation path during the air-cooling operation, as will be described later. It is to be noted that a point marked U1 in the piping 26 shown in FIGS. 4 through 6 indicates an area where piping sections 26 cross each other while in communication with each other.

The outside heat exchanger 22 and the compressor 23 are similar to those in embodiment 1 described earlier. The outside heat exchanger 22, disposed in the cabin outside area to achieve heat exchange between air (outside air) in the cabin outside area and the heat exchanging medium, includes an outside fan 28 and assumes a position at which it is impacted by wind traveling from the front of the vehicle as the vehicle travels. In addition, the compressor 23, also disposed outside the cabin, as is the outside heat exchanger 22, draws in the heat exchanging medium as it is driven by an electric motor (not shown), compresses the heat exchanging medium and then discharges the compressed heat exchanging medium. It is to be noted that the compressor 23 may operate on motive power provided by the vehicle engine in a hybrid vehicle, as in embodiment 1.

The expansion device 24 disposed between the inside cooling heat exchanger 45 and the inside air-heating heat exchanger 46, via which the heat exchanging medium transferred from the inside air-heating heat exchanger 46 to the inside air-cooling heat exchanger 45 is depressurized and is thus caused to expand, may be constituted with a block-type expansion valve connected as an integrated part of the inside air-heating heat exchanger 5, a capillary tube or the like.

With the direction switching valve 25 in embodiment 2, a first heat exchanging medium circulation path through which the heat exchanging medium first flows from the compressor 23 to the inside air-heating heat exchanger 46, as shown in FIG. 5 or a second heat exchanging medium circulation path through which the heat exchanging medium first flows from the compressor 23 to the outside heat exchanger 22 and then the heat exchanging medium flows from the outside heat exchanger 22 to the inside air-heating heat exchanger 46, as shown in FIG. 6 can be selected. A switchover at the direction switching valve 25 is achieved via an actuator 29 shown in FIG. 4.

During the air-heating operation, the direction switching valve 25 in the heat pump system 2 structured as described above is engaged in a heating operation, is set to select the first heat exchanging medium circulation path shown in FIG. 5 so as to allow the high-temperature/high-pressure heat exchanging medium discharged from the compressor 23 to flow, via the direction switching valve 25, to the inside air-heating heat exchanger 46, thereby enabling the inside air-heating heat exchanger 46 to function as a heater. After the heat exchanging medium exchanges heat with the air inside the air passage 4 and thus heats the air in the air passage 4, the heat exchanging medium becomes depressurized and is thus made to expand at the expansion device 24. It then flows to the inside air-cooling heat exchanger 45 where it exchanges heat with the air in the air passage 4 to dehumidify and cool the air before it returns to the compressor 23. At this time, the air mix door 47 is driven so as to open windward vent panel toward the inside air-heating heat exchanger 46 to a predetermined degree of openness.

During the air-cooling operation, the direction switching valve 25 is set to select the second heat exchanging medium circulation path shown in FIG. 6 so as to allow the high-temperature/high-pressure heat exchanging medium discharged from the compressor 23 to travel, via the direction switching valve 25, toward the outside heat exchanger 22. The heat exchanging medium is then cooled at the outside heat exchanger 22, and the heat exchanging medium, the temperature of which has been reduced to a relatively low level, passes through the inside air-heating heat exchanger 46. Subsequently, it becomes depressurized and is thus caused to expand at the expansion device 24. It then flows to the inside air-cooling heat exchanger 45 where it exchanges heat with the air inside the air passage 4 to dehumidify and cool the air, before returning to the compressor 23. At this time, the air mix door 47 is driven so as to completely close off the ventilation space toward the inside air-heating heat exchanger 46 and thus, the air inside the air passage 4 is not heated.

In the heat pump system 2 achieved in embodiment 2, too, the compressor 23 is housed inside a compressor housing 30, which includes an air intake opening 31 through which air from the cabin outside area is drawn in and an air outlet opening 32 through which air is output to the cabin outside area. The air intake opening 31, as does the air intake opening in embodiment 1, opens on the air flow downstream side of the outside heat exchanger 22 so that air can be taken into the compressor housing 30 through the air intake opening 31 as the outside fan 28, disposed by the outside heat exchanger 22, is driven even when the vehicle is not in a traveling state. As in embodiment 1, no particular restrictions are imposed with regard to the internal structure and the volumetric capacity of the compressor housing 30, as long as a relatively small clearance is formed between the compressor 23 and the inner wall of the compressor housing 30.

As in embodiment 1, the air intake opening 31 is opened/closed with a compressor opening/closing door 33, whereas the air outlet opening 32 is opened/closed with a compressor opening/closing door 34. Open/close control for the compressor opening/closing doors 33 and 34, each shown as a butterfly-type door in the illustrations of embodiment 2, is achieved via actuators 35 and 36 respectively. However, as has been executed in reference to embodiment 1, the compressor opening/closing doors 33 and 34 do not need to be butterfly-type doors, and they may instead be shutter-type doors, which open/close the openings 31 and 32 as a plurality of blades, disposed side-by-side along the radii of the openings 31 and 32 rotate. As a further alternative, cantilevered doors or sliding doors may be used as the compressor opening/closing doors.

Once the openings 31 and 32 at the compressor housing 30 are both closed with the compressor opening/closing doors 33 and 34, the compressor housing 30 is set in a sealed state, in which the air present around the compressor 23 inside the compressor housing 30 is trapped in the compressor housing 30 instead of being released to the outside of the compressor housing 30.

In addition, the structure achieved in embodiment 2, too, further includes an inside temperature sensor 38, which detects the inside temperature such as the cabin internal temperature, disposed outside the case 5, e.g., at an instrument panel or on the dashboard within the cabin.

Furthermore, the air-conditioning apparatus 1 achieved in embodiment 2 also includes a control unit 40, which controls the individual structural elements in response to input signals provided thereto, as shown in FIG. 4. The following is a brief summary of the control unit 40. The input signals provided to the control unit 40 include an input signal indicating the inside temperature provided by the inside temperature sensor 38, an input signal indicating a temperature setting, which is provided from a control panel 41, an input signal indicating the outside air temperature (not shown) and an input signal indicating whether or not an occupant is seated, provided from a seat sensor, among various signals. Based upon the input signals, the control unit 40 outputs control signals for the fan motor 9, the actuators 35 and 36 that drive the compressor opening/closing doors 33 and 34 respectively and the actuator 29 that drives the direction switching valve 25 so as to control the rotation rate of the fan motor 9, execute open/close control for the compressor opening/closing doors 33 and 34 and switch the direction switching valve 25. The control unit 40 also uses the input signals to generate control signals for an intake actuator 42 for the intake device 11 and a mode actuator 43 for the mode doors 18, 19 and 20 so as to switch to the inside air delivery port 13 or the outside air delivery port 14 and select a specific output mode.

During the air-heating operation, the control signal provided from the control unit 40 to the direction switching valve 25 sets the direction switching valve 25 to select the first heat exchanging medium circulation path shown in FIG. 5 at the heat pump system 2. During the air-heating operation, the foot mode is selected in the HVAC unit 3, as shown in FIG. 5 in response to the control signal provided from the control unit 40 to the mode actuator 43 and also, the air intake opening 31 and the air outlet opening 32 at the compressor housing 30 are closed with the compressor opening/closing doors 33 and 34 in response to the control signals provided from the control unit 40 to the actuators 35 and 36 that drive the compressor opening/closing doors 33 and 34, as shown in FIG. 2, at the HVAC unit 3.

As a result, the air present around the compressor 23, trapped inside the compressor housing 30 becomes heated by the compressor 23 and heat is stored in the air surrounding the compressor 23. Since the air inside the compressor housing 30, with its temperature thus risen, keeps the warmth of the compressor 23, the temperature of the heat exchanging medium delivered from the compressor 23 to the inside air-heating heat exchanger 46, too, rises to a relatively high level. Consequently, the performance of the inside air-heating heat exchanger 46 functioning as a heater that heats the air passing through the air passage 4 improves and air-heated to a sufficiently high-temperature can be output into the cabin inside space through the foot opening 17.

During the air-cooling operation, the control signal provided from the control unit 40 to the direction switching valve 25 in the heat pump system 2 sets the direction switching valve 25 to select the second heat exchanging medium circulation path shown in FIG. 6. During the air-cooling operation, the vent mode is selected in response to the control signal provided from the control unit 40 to the mode actuator 43 and the two openings 31 and 32 at the compressor housing 30 are both opened with the compressor opening/closing doors 33 and 34 in response to the control signal provided from the control unit 40 to the actuators 35 and 36 that drive the compressor opening/closing doors 33 and 34, as shown in FIG. 6 at the HVAC unit 3.

Thus, the compressor 23 is cooled with the air that, having been taken into the compressor housing 30 through the air intake opening 31, is eventually output to the cabin outside area through the air outlet opening 32, so as to minimize circulation of unnecessarily hot heat exchanging medium through the heat pump system 2.

It is to be noted that during the air-heating operation, too, finer open/close control for the compressor opening/posing doors 33 and 34 may be executed by providing from the control unit 40 control signals for the actuators 35 and 36, which drive the compressor opening/closing doors 33 and 34, generated based upon the detected value of the temperature provided from the inside temperature sensor 38, in embodiment 2 as well.

FIGS. 7 through 10 provide illustrations of yet another embodiment (embodiment 3) of the air-conditioning apparatus 1 equipped with an HVAC unit 3 and a heat pump system 2.

In this air-conditioning apparatus 1, which may be used in, for instance, an electric vehicle, a hybrid vehicle or the like, as are the air-conditioning apparatuses in embodiments 1 and 2, the HVAC unit 3 is disposed further into a cabin inside space relative to a firewall (not shown) partitioning a cabin outside area from the cabin inside space. An inside air-cooling heat exchanger 45, such as an evaporator, constituting part of the heat pump system 2 and an inside air-heating heat exchanger 46 also constituting part of the heat pump system 2, each assuming an upright orientation, are housed side-by-side along the length (front to rear) of the vehicle within a case 5 in which an inside air passage 4 is formed. A fan 7 is disposed further on an air upstream side relative to the inside air-cooling heat exchanger 45 within the air passage 4.

An intake device 11 is disposed further on the air upstream side relative to the fan 7, and as the fan 7 rotates, inside air or outside air is drawn into the intake device 11 through an outside air delivery port 13 or an inside air delivery port 14 in correspondence to the position (the degree of openness) of an intake door 12 at the intake device 11.

Inside the case 5, a cool air passage 48, through which air, having become cooled and dehumidified while passing through the inside air-cooling heat exchanger 45, is guided to the airflow downstream side of the air passage 4 by bypassing the inside air-heating heat exchanger 46 and a hot air passage 49, through which the air having passed through the inside air-heating heat exchanger 46 is guided toward the air flow downstream side of the air passage 4, are formed both as part of the air passage 4. The ratio of the air to pass through the cool air passage 48 and the air to pass through the hot air passage 49 is adjusted at an air mix door 47 disposed between the inside air-cooling heat exchanger 45 and the inside air-heating heat exchanger 46, and then the air, having flowed through the cooling air passage 48 and the air having flowed through the hot air passage 49 mix as intended at a position further downstream relative to the air mix door 47 in the air passage 4, so as to achieve a desired temperature.

At the downstream end of the air passage 4, a defrost opening 15 through which air is output toward a windshield (not shown), a ventilation opening 16 through which air is output along an upward direction into the cabin inside space and a foot opening 17 through which air is output along a downward direction into the cabin inside space are formed, and the degrees of openness of the individual openings 15, 16 and 17 are respectively adjusted via mode doors 18, 19 and 20 disposed further to the front of the corresponding openings 15, 16 and 17. In other words, the air-conditioning apparatus is engaged in operation in a defrost mode in which the defrost opening 15 alone is open, a vent mode in which the ventilation opening 16 alone is open, a foot mode in which the foot opening 17 alone is open, a defrost/foot mode in which the defrost opening 15 and the foot opening 17 are open or a bi-level mode in which the ventilation opening 16 and the foot opening 17 are open.

The heat pump system 2, which cools and heats the air inside the cabin inside space with the inside cooling heat exchanger 45 and the inside air-heating heat exchanger 46 mentioned earlier, includes an outside heat exchanger 22, a compressor 23, an expansion device 24, a direction switching valve 25 via which the direction along which the heat exchanging medium flows is switched and a check valve 51 that prevents a reverse flow of the heat exchanging medium, in addition to the heat exchangers 45 and 46 disposed within the air passage 4 of the HVAC unit 3.

The inside air-cooling heat exchanger 45, the inside air-heating heat exchanger 46, the outside heat exchanger 22, the compressor 23, the expansion device 24, the direction switching valve 25 and the check valve 51 are connected with one another via a piping 26, so as to allow the heat exchanging medium such as Freon or CO2 to circulate through a first heat exchanging medium circulation path during the air-heating operation or through a second heat exchanging medium circulation path during the air-cooling operation, as will be described later. It is to be noted that a point marked U1 in the piping 26 shown in FIGS. 7 through 10 indicates an area where piping sections 26 cross each other while in communication with each other.

The outside heat exchanger 22 and the compressor 23 are similar to those in embodiments 1 and 2 described earlier, and the outside heat exchanger 22 and the expansion device 24 are engaged in operation as described earlier in reference to embodiment 2. It is to be noted that the compressor 23 may operate on motive power provided by the vehicle engine in a hybrid vehicle, as in embodiments 1 and 2.

With the direction switching valve 25 in embodiment 3, too, a first heat exchanging medium circulation path through which the heat exchanging medium flows directly from the compressor 23 to the inside air-heating heat exchanger 46, as shown in FIGS. 8 and 9 or a second heat exchanging medium circulation path through which the heat exchanging medium first flows from the compressor 23 to the outside heat exchanger 22 and then the heat exchanging medium flows from the outside heat exchanger 22 to the inside air-heating heat exchanger 46, as shown in FIG. 10 can be selected. A switchover at the direction switching valve 25 is achieved via an actuator 29 shown in FIG. 7, as in embodiment 2.

During the air-heating operation, the direction switching valve 25 in the heat pump system 2 structured as described above is engaged in a heating operation, is set to select the first heat exchanging medium circulation path shown in FIGS. 8 and 9 so as to allow the high-temperature/high-pressure heat exchanging medium discharged from the compressor 23 to flow, via the direction switching valve 25, to the inside air-heating heat exchanger 46, thereby enabling the inside air-heating heat exchanger 46 to function as a heater. After the heat exchanging medium exchanges heat with the air inside the air passage 4 and thus heats the air in the air passage 4, the heat exchanging medium becomes depressurized and is thus made to expand at the expansion device 24. It then flows to the inside air-cooling heat exchanger 45 where it exchanges heat with the air in the air passage 4 to dehumidify and cool the air before it returns to the compressor 23. At this time, the air mix door 47 is driven so as to open windward vent panel toward the inside air-heating heat exchanger 46 to a predetermined degree of openness.

During the air-cooling operation, the direction switching valve 25 is set to select the second heat exchanging medium circulation path shown in FIG. 10 so as to allow the high-temperature/high-pressure heat exchanging medium discharged from the compressor 23 to travel, via the direction switching valve 25, toward the outside heat exchanger 22. The heat exchanging medium is then cooled at the outside heat exchanger 22, and the heat exchanging medium, the temperature of which has been reduced to a relatively low level, passes through the inside air-heating heat exchanger 46. Subsequently, it becomes depressurized and is thus caused to expand at the expansion device 24. It then flows to the inside air-cooling heat exchanger 45 where it exchanges heat with the air inside the air passage 4 to dehumidify and cool the air, before returning to the compressor 23. At this time, the air mix door 47 is driven so as to completely close off the ventilation space toward the inside air-heating heat exchanger 46 and thus, the air inside the air passage 4 is not heated.

In the heat pump system 2 achieved in embodiment 3, too, the compressor 23 is housed inside a compressor housing 30 as in the heat pump systems in embodiments 1 and 2. However, the compressor housing 30 in embodiment 3 is unique in that an air intake opening 31, through which air is taken in from the cabin outside area, an air outlet opening 32a, through which air is output into the space between the intake device 11 and the fan 7 at the air passage 4 and an air outlet opening 32b through which air is let out into the cabin outside area are formed thereat. The air intake opening 31, as in embodiments 1 and 2, opens on the airflow downstream side of the outside heat exchanger 22 so that air can be taken into the compressor housing 30 through the air intake opening 31 as the outside fan 28, disposed by the outside heat exchanger 22, is driven even when the vehicle is not in a traveling state. As in embodiments 1 and 2, no particular restrictions are imposed with regard to the internal structure and the volumetric capacity of the compressor housing 30, as long as a relatively small clearance is formed between the compressor 23 and the inner wall of the compressor housing 30.

As in embodiment 1, the air intake opening 31 is opened/closed with a compressor opening/closing door 33. The air outlet openings 32a and 32b are respectively opened and closed with compressor opening/closing doors 34a and 34b. Open/close control for the compressor opening/closing doors 33, 34a and 34b, each shown as a butterfly-type door in the illustrations of embodiment 3, is achieved via actuators 35 and 36 respectively. However, the compressor opening/closing doors 33, 34a and 34b do not need to be butterfly-type doors, and they may instead be shutter-type doors, which open/close the openings 31, 32a and 32b as a plurality of blades, disposed side-by-side along the radii of the openings 31, 32a and 32b, rotate. As a further alternative, cantilevered doors or sliding doors may be used as the compressor opening/closing doors. In addition, the actuator 36 controls the compressor opening/closing doors 34a and 34b in a control mode in which the air outlet opening 32a alone is closed with the compressor opening/closing door 34a, as shown in FIG. 8, in a control mode in which the air outlet opening 32b alone is closed with the compressor opening/closing door 34b, as shown in FIG. 10, or in a control mode in which the air outlet openings 32a and 32b are both closed with the compressor opening/closing doors 34a and 34b respectively as shown in FIG. 9.

Once the openings 31, 32a and 32b at the compressor housing 30 are all closed with the compressor opening/closing doors 33, 34a and 34b, the compressor housing 30 is set in a sealed state, in which the air present around the compressor 23 inside the compressor housing 30 is trapped in the compressor housing 30 instead of being released to the outside of the compressor housing 30.

In addition, the structure achieved in embodiment 3, too, further includes an inside temperature sensor 38, which detects the inside temperature such as the cabin internal temperature, disposed outside the case 5, e.g., at an instrument panel or on the dashboard within the cabin.

The air-conditioning apparatus 1 achieved in embodiment 3 also includes a control unit 40, which controls various structural elements in response to input signals provided thereto as shown in FIG. 7. The following is a brief summary of the control unit 40. The input signals provided to the control unit 40 include an input signal indicating the inside temperature provided by the inside temperature sensor 38, an input signal provided by a timer 53 that counts the length of time elapsing following an air-heating operation start, an input signal indicating a temperature setting, which is provided from a control panel 41, an input signal indicating the outside air temperature (not shown) and an input signal indicating whether or not an occupant is seated, provided from a seat sensor, among various signals. Based upon the input signals, the control unit 40 outputs control signals for the fan motor 9, the actuators 35 and 36 that drive the compressor opening/closing doors 33 and 34 respectively and the actuator 29 that drives the direction switching valve 25 so as to control the rotation rate of the fan motor 9, execute open/close control for the compressor opening/closing doors 33 and 34 and switch the direction switching valve 25. The control unit 40 also uses the input signals to generate control signals for an intake actuator 42 for the intake device 11 and a mode actuator 43 for the mode doors 18, 19 and 20 so as to switch to the inside air delivery port 13 or the outside air delivery port 14 and select a specific output mode.

During the initial phase of the air-heating operation, the control signal provided from the control unit 40 to the direction switching valve 25 sets the direction switching valve 25 to select the first heat exchanging medium circulation path shown in FIG. 8 at the heat pump system 2. During the initial phase of the air-heating operation, the foot mode is selected in response to the control signal provided from the control unit 40 to the mode actuator 43 and also, the air intake opening 31 at the compressor housing 30 is closed, the air outlet opening 32b at the compressor housing 30 is closed and the air outlet opening 32a at the compressor housing 30 is opened respectively with the compressor opening/closing door 33, the compressor opening/closing door 34b and the compressor opening/closing door 34a in response to control signals provided from the control unit 40 to the actuators 35 and 36 that drive the compressor opening/closing doors 33, 34a and 34b, as shown in FIG. 8 at the HVAC unit 3.

The air from the cabin outside area, having been drawn into the compressor housing 30 through the air intake opening 31, is heated as it passes through the space around the compressor 23, and is then guided to the fan 7 through the air outlet opening 32a to be mixed with the air having been drawn in through the inside air/outside air delivery ports 13 and 14. Thus, air that is warmer than air-heated through the inside air-heating heat exchanger 46 by using only the relatively low-temperature outside air or the like, can be output through the foot opening 17 from an early stage. In addition, since the temperature of the air taken into the inside cooling heat exchanger 45, too, can be raised, freezing of the inside cooling heat exchanger 45 can be prevented, which, in turn, prevents the heat pump cycle itself from failing.

However, if this initial phase heating operation were continuously executed, the air originating from the cabin outside area, which has been taken into the compressor housing 30 through the air intake opening 31, might release heat via a duct while it travels from the air outlet opening 32a to the fan 7 and, in such a case, the heating performance would not be improved to its full potential. Accordingly, once the air-heating operation stabilizes, i.e., once the risk of the inside cooling heat exchanger 45 becoming frozen is eliminated, the operation shifts into the following operational phase so as to improve the air-heating performance with a higher level of reliability.

Namely, once the heating operation enters the stable stage, the direction switching valve 25 in the heat pump system 2 is set to select the first heat exchanging medium circulation path shown in FIG. 9 in response to the control signal provided from the control unit 40 to the direction switching valve 25. At the HVAC unit 3, the foot mode is selected in response to the control signal provided from the control unit 40 to the mode actuator 43, and also, the compressor opening/closing door 33 closes the air intake opening 31 at the compressor housing 30, the compressor opening/closing door 34a closes the air outlet opening 32a at the compressor housing 30 and the compressor opening/closing door 34b closes the air outlet opening 32b at the compressor housing 30 in response to control signals provided from the control unit 40 to the actuators 35 and 36 that drive the compressor opening/closing doors 33, 34a and 34b, as shown in FIG. 9.

As a result, the air present around the compressor 23, trapped inside the compressor housing 30 becomes heated by the compressor 23 and heat is stored in the air surrounding the compressor 23. Since the air inside the compressor housing 30, with its temperature thus risen, keeps the warmth of the compressor 23, the temperature of the heat exchanging medium delivered from the compressor 23 to the inside air-heating heat exchanger 46, too, rises to a relatively high level. Consequently, the performance of the inside air-heating heat exchanger 46 improves and air-heated to a sufficiently high-temperature can be output into the cabin inside space through the foot opening 17.

The operation shifts from the initial phase air heating mode to the stable phase air heating mode based upon, for instance, the detected temperature input from the inside temperature sensor 38 or the length of time having elapsed following the air heating operation start, which is input from the timer 53.

During the air cooling operation, the control signal provided from the control unit 40 to the direction switching valve 25 in the heat pump system 2 sets the direction switching valve 25 to select the second heat exchanging medium circulation path shown in FIG. 10. During the air cooling operation, the vent mode is selected in response to the control signal provided from the control unit 40 to the mode actuator 43 and also the air intake opening 31 at the compressor housing 30 is opened with the compressor opening/closing door 33, the air outlet opening 32a at the compressor housing 30 is closed with the compressor opening/closing door 34a and the air outlet opening 32b at the compressor housing 30 is opened with the compressor opening/closing door 34b in response to the control signal provided from the control unit 40 to the actuators 35 and 36 that drive the compressor opening/closing doors 33, 34a and 34b, as shown in FIG. 10 at the HVAC unit 3.

Thus, the compressor 23 is cooled with the air that, having been taken into the compressor housing 30 through the air intake opening 31, is eventually output to the cabin outside area through the air outlet opening 32b, so as to minimize circulation of unnecessarily hot heat exchanging medium through the heat pump system 2.

Comparison of a state in which the heat at the compressor 23 housed inside the compressor housing 30 is retained by sealing the compressor housing 30 (hereafter referred to as a "state of active compressor heat retention") and a state in which the compressor 23 is not housed inside the compressor housing 30, i.e., the state in which the heat of the compressor 23 is not actively retained (hereafter referred to as a "state of no active compressor heat retention") indicates that air with a relatively high-temperature can be output through the foot opening 17 with less power consumed at the compressor 23 during the air heating operation in the state of active compressor heat retention rather than in the state of no active compressor heat retention, as shown in FIG. 11.

More specifically, while the temperature of the air output through the foot opening 17 during the air heating operation is approximately 21 to 22°C with 1.2 kW power consumed at the compressor 23 in the state of no active compressor heat retention, the temperature of the air output through the foot opening 17 during the air heating operation can be raised to approximately 25°C with the same 1.2 kW power consumed at the compressor 23 in the state of active compressor heat retention. In addition, while the temperature of the air output through the foot opening 17 during the heating operation is approximately 25°C with 1.6 kW power consumed at the compressor 23 in the state of no active compressor heat retention, the temperature of the air output through the foot opening 17 during the air heating operation can be raised to approximately 27 to 28°C with the same 1.6 kW power consumed at the compressor 23 in the state of active compressor heat retention. In other words, while the compressor 23 needs to consume approximately 1.6 kW power in order to achieve a temperature of approximately 25°C for the air output from the foot opening 17 in the air heating operation executed in the state of no active compressor heat retention, the 25°C air temperature can be achieved with only 1.2 kW power consumed at the compressor 23 in the state of active compressor heat retention and thus, significant power saving is realized at the compressor 23.

While an explanation is given above by assuming that the heat pump system 2 according to the present invention is installed in an electric vehicle or a hybrid vehicle, the present invention is not limited to this example and the heat pump system 2 according to the present invention may be installed in a conventional vehicle equipped with an internal combustion engine, such as a gasoline engine alone.
- 1: air-conditioning apparatus
- 2: heat pump system
- 3: HVAC unit
- 4: air passage
- 5: case
- 6: inside heat exchanger
- 15: defrost opening
- 16: ventilation opening
- 17: foot opening
- 18, 19, 20: intake door
- 22: outside heat exchanger
- 23: compressor
- 24: expansion valve
- 25: direction switching valve
- 26: piping
- 29: actuator for direction switching valve
- 30: compressor housing
- 31: air intake opening
- 32: air outlet opening
- 33: compressor opening/closing door
- 34: compressor opening/closing door
- 35: actuator for compressor opening/closing door
- 36: actuator for compressor opening/closing door
- 38: inside temperature sensor
- 40: control unit
- 41: control panel
- 42: intake actuator
- 43: mode actuator
- 45: inside air-cooling heat exchanger
- 46: inside air-heating heat exchanger (inside heat exchanger)
- 47: air mix door
- 48: cool air passage
- 49: hot air passage
- 53: timer

## Claims

1. A heat pump system (2), comprising at least:
• a compressor (23) that suctions in a heat exchanging medium, compresses the heat exchanging medium and discharges the compressed heat exchanging medium;
• an inside heat exchanger (6) housed within an air passage (4) located in a cabin side;
• an outside heat exchanger (22) disposed in an area outside the cabin side;
• an expansion device (24); and
• a set of pipings that connects said compressor (23), said inside heat exchanger (6), said outside heat exchanger (22) and said expansion device with one another;
• further equipped with:
• a switching means (25) capable of switching heat exchanging medium flow directions so as to provide the heat exchanging medium at a relatively high-temperature, discharged from said compressor to said inside heat exchanger during an air heating operation and to said outside heat exchanger during an air cooling operation,
**characterized in that** said compressor is housed inside an adiabatic compressor housing (30), said compressor housing is set in a sealed state so as to keep the air around said compressor trapped within said housing, so that heat generated at said compressor is stored in air around said compressor,
and **in that**:
• said compressor housing includes an air intake opening (31) through which air flows into said compressor housing, an air outlet opening (32) through which air inside said compressor housing flows out, and opening/closing means (33,34) for opening/closing said air intake opening and said air outlet opening; and
• as both said air intake opening and said air outlet opening are closed via said opening/closing means, said compressor housing is set in a sealed state.

2. A heat pump system according to claim 1, further comprising:
• an inside air-cooling heat exchanger that is housed, together with an impeller (7), in said air passage (5) further leeward along said air passage relative to said impeller,
**characterized in that** said air outlet opening at said compressor housing is made up with a first opening (32a) connected with said air passage further on a windward side relative to said impeller and a second opening (32b) that opens at an area outside the cabin side; and
an opening/closing means (36) for opening/closing said first opening and an opening/closing means for opening/closing said second opening are able to open/close said openings independently of each other.

## Patentansprüche

1. Wärmepumpensystem (2), das zumindest Folgendes umfasst:
• einen Kompressor (23), der ein Wärmeaustauschmedium ansaugt, das Wärmeaustauschmedium komprimiert und das komprimierte Wärmeaustauschmedium fördert;
• einen Innenwärmeaustauscher (6), der innerhalb eines Luftdurchgangs (4), der sich auf einer Kabinenseite befindet, untergebracht ist;
• einen Außenwärmeaustauscher (22), der in einem Bereich außerhalb der Kabinenseite untergebracht ist;
• eine Expansionsvorrichtung (24); und
• eine Gruppe von Leitungen, die den Kompressor (23), den Innenwärmeaustauscher (6), den Außenwärmeaustauscher (22) und die Expansionsvorrichtung miteinander verbinden; und
• das ferner mit Folgendem ausgestattet ist:
• einer Schaltvorrichtung (25), die Strömungsrichtungen des Wärmeaustauschmediums schalten kann, um das Wärmeaustauschmedium mit einer relativ hohen Temperatur, das von dem Kompressor gefördert wurde, während eines Luftheizvorgangs an den Innenwärmeaustauscher und während eines Kühlvorgangs an den Außenwärmeaustauscher zu liefern,
**dadurch gekennzeichnet, dass** der Kompressor innerhalb eines adiabatischen Kompressorgehäuses (30) untergebracht ist,
wobei das Kompressorgehäuse in einen abgedichteten Zustand versetzt ist, um die Luft um den Kompressor innerhalb des Gehäuses zu halten, so dass an dem Kompressor erzeugte Wärme in der Luft um den Kompressor gespeichert wird,
und dadurch, dass:
• das Kompressorgehäuse eine Lufteinlassöffnung (31), durch die Luft in das Kompressorgehäuse strömt, eine Luftauslassöffnung (32), durch die in dem Kompressorgehäuse befindliche Luft herausströmt; und Öffnungs-/Schließmittel (33, 34) zum Öffnen/Schließen der Lufteinlassöffnung und der Luftauslassöffnung enthält; und
• das Kompressorgehäuse dann, wenn sowohl die Lufteinlassöffnung als auch die Luftauslassöffnung über die Öffnungs-/Schließmittel geschlossen sind, in einen abgedichteten Zustand versetzt ist.

2. Wärmepumpensystem nach Anspruch 1, das ferner Folgendes umfasst:
• einen Innenluftkühlungswärmeaustauscher, der zusammen mit einem Gebläserad (7) in dem Luftdurchgang (5) weiter stromabseitig entlang des Luftdurchgangs relativ zu dem Gebläserad untergebracht ist,
**dadurch gekennzeichnet, dass** die Luftauslassöffnung an dem Kompressorgehäuse mit einer ersten Öffnung (32a), die mit dem Luftdurchgang weiter stromaufseitig relativ zu dem Gebläserad verbunden ist, und einer zweiten Öffnung (32b), die in einen Bereich außerhalb der Kabinenseite mündet, ausgebildet ist, und
Öffnungs-/Schließmittel (36) zum Öffnen/Schließen der ersten Öffnung und Öffnungs-/Schließmittel zum Öffnen/Schließen der zweiten Öffnung die Öffnungen unabhängig voneinander öffnen/schließen können.

## Revendications

1. Système de pompe à chaleur (2), comprenant au moins:
• un compresseur (23) qui aspire un milieu échangeur de chaleur, comprime le milieu échangeur de chaleur et décharge le milieu échangeur de chaleur comprimé;
• un échangeur de chaleur intérieur (6) logé à l'intérieur d'un passage d'air (4) situé dans un côté cabine;
• un échangeur de chaleur extérieur (22) disposé dans une région extérieure au côté cabine;
• un dispositif d'expansion (24); et
• un ensemble de canalisations qui connecte ledit compresseur (23), ledit échangeur de chaleur intérieur (6), ledit échangeur de chaleur extérieur (22) et ledit dispositif d'expansion les uns aux autres;
• équipé en outre:
• d'un moyen de commutation (25) capable de commuter des directions d'écoulement de milieu échangeur de chaleur de manière à fournir le milieu échangeur de chaleur à une température relativement élevée, déchargé à partir dudit compresseur audit échangeur de chaleur intérieur pendant une opération de chauffage d'air et audit échangeur de chaleur extérieur pendant une opération de refroidissement d'air,
**caractérisé en ce que** ledit compresseur est logé à l'intérieur d'un boîtier de compresseur adiabatique (30), ledit boîtier de compresseur se trouvant dans un état scellé de manière à maintenir l'air autour dudit compresseur piégé à l'intérieur dudit boîtier, de telle sorte que la chaleur générée audit compresseur soit stockée dans l'air autour dudit compresseur,
et **en ce que**:
• ledit boîtier de compresseur comporte une ouverture d'admission d'air (31) à travers laquelle de l'air s'écoule dans ledit boîtier de compresseur, une ouverture de sortie d'air (32) à travers laquelle l'air à l'intérieur dudit boîtier de compresseur sort, et des moyens d'ouverture/fermeture (33, 34) pour ouvrir/fermer ladite ouverture d'admission d'air et ladite ouverture de sortie d'air; et
• lorsque ladite ouverture d'admission d'air et ladite ouverture de sortie d'air sont toutes les deux fermées par l'intermédiaire desdits moyens d'ouverture/fermeture, ledit boîtier de compresseur est placé dans un état scellé.

2. Système de pompe à chaleur selon la revendication 1, comprenant en outre:
• un échangeur de chaleur de refroidissement d'air intérieur qui est logé, de concert avec une turbine (7), dans ledit passage d'air (5) plus loin sous le vent le long dudit passage d'air par rapport à ladite turbine,
**caractérisé en ce que** ladite ouverture de sortie d'air dudit boîtier de compresseur est constituée d'une première ouverture (32a) connectée audit passage d'air plus loin sur un côté au vent par rapport à ladite turbine, et une seconde ouverture (32b) qui s'ouvre vers une région extérieure audit côté cabine; et
des moyens d'ouverture/fermeture (36) pour ouvrir/fermer ladite première ouverture et des moyens d'ouverture/fermeture pour ouvrir/fermer ladite seconde ouverture sont capables d'ouvrir/fermer lesdites ouvertures indépendamment l'une de l'autre.
